# EUROPEAN PATENT APPLICATION

(11) **EP 4 810 453 A1**
(43) Date of publication of application: **23.09.2026**
(21) Application number: 25165447.1
(22) Date of filing: 21.03.2025
(51) Int. Cl.: C04B 28/04, C04B 28/06, C04B 7/24, C04B 20/04, C04B 40/00, C04B 103/00

(54) **SUPPLEMENTARY CEMENTITIOUS MATERIAL, METHOD OF MANUFACTURING SAME AND USE THEREOF IN COMPOSITE BINDER FOR CEMENTITIOUS BUILDING MATERIAL**

(71) Applicant: Holcim Technology Ltd., 6300 Zug (CH)
(72) Inventor: TERMKHAJORNKIT, Pipat, 38070 Saint Quentin Fallavier (FR); BENARD, Philippe, 38070 Saint Quentin Fallavier (FR); MEUNIER, Laurent, 38070 Saint Quentin Fallavier (FR); BRUN, Sandrine, 38070 Saint Quentin Fallavier (FR)
(74) Representative: Kraus & Lederer PartGmbB

(57) **Abstract**

The invention aims to substitute a part of the clinker component in cement by a (recycled) mineral material, the provision of which does not emit significant amounts of CO₂. To this end, the invention provides a method of manufacturing a supplementary cementitious material from a mineral material such as recycled concrete fines, the method comprising the following steps: a step of grinding the mineral material; a step of chemical activation, carried out during or after the step of grinding; a step of thermal activation, carried out before or after the step of chemical activation; wherein the mineral material comprises cement paste; and wherein the step of chemical activation is carried out by contacting the mineral material with at least one activator selected from alkali metal salts. The invention further provides the supplementary cementitious material obtained by that method and the use of the supplementary cementitious material in a composite binder as well as a composite binder comprising the supplementary cementitious material. The invention also relates to a cementitious building material comprising the composite binder.

## Description

### FILED OF INVENTION

The invention relates to a method of manufacturing a supplementary cementitious material from a mineral material such as recycled concrete fines (RCF). It further relates to the supplementary cementitious material obtained by that method and the use of the supplementary cementitious material in a composite binder as well as a composite binder comprising the supplementary cementitious material. The invention also relates to a cementitious building material comprising the composite binder.

### BACKGROUND OF THE INVENTION

Concrete production is a significant contributor to global CO₂ emissions, currently accounting for approximately 8% of the world's total CO₂ emissions. The primary source of these emissions is the production of cement, a key ingredient in concrete (the other key ingredients being aggregate, i.e. coarse- to medium-grained particulate material, and water). Cement manufacturing involves the calcination of limestone (calcium carbonate), which releases large amounts of CO₂ as a byproduct.

The environmental impact of concrete is particularly significant due to its widespread use. Concrete is the second most consumed material on Earth after water, with global production expected to grow from 14 billion cubic meters today to 20 billion cubic meters by about 2050. This growth poses a significant challenge for reducing CO₂ emissions in the sector.

Addressing the CO₂ emissions from concrete production is critical for achieving global climate targets. Efforts to reduce emissions include developing alternative materials, improving energy efficiency and producing concrete and similar building materials from recycled raw materials. However, finding scalable and economically viable solutions remains a major challenge for the industry.

EP 3 498 681 A1 relates to the use of carbonated recycled concrete fines as a supplementary cementitious material and describes a method for manufacturing a supplementary cementitious material from recycled concrete fines, comprising (i) providing recycled concrete fines as the starting material, (ii) carbonation of the starting material in a carbonation atmosphere providing carbonated starting material and (iii) de-agglomerating the carbonated starting material to form the supplementary cementitious material. However, this method does not lead to any strength improvements in terms of early strength.

EP 4 265 582 A1 relates to a method for the preparation of an at least partially carbonated mineral component in particular for the use as a substituent of cement in hydraulic binder compositions, wherein a raw material comprising at least one of the group of concrete demolition waste, hardened concrete paste, hardened cement paste, or any mineral component containing hydrated calcium silicates, calcium aluminates is carbonated and heated; the document also describes a carbonated mineral component manufactured by this method, a method for the preparation of a hydraulic binder using the carbonated mineral component and a cementitious component as well as a concrete composition with that hydraulic binder.

### SUMMARY OF THE INVENTION

### Problem to be solved by the invention

There is an urgent need to provide cementitious building materials which can be produced with decreased CO₂ emissions, compared to the production of conventional concrete. At the same time, such building materials must provide good mechanical properties, such as strength, and it is desirable that such strength is developed rapidly, i.e. within a short period from the setting of the building material. To this end, the content of clinker in the cementitious component of the building material, such as concrete, is to be reduced. Thereby, the amount of CO₂ per unit weight of cement emitted in the production of cementitious materials is to be reduced.

The invention aims to substitute a part or all of the clinker component, especially Portland clinker, in cement, especially Portland cement, by a (recycled) mineral material, the provision of which does not emit (significant amounts of) CO₂. This provides a circular economy solution and, thus, a more environmentally sustainable alternative to conventional cement and concrete production. One such (recycled) mineral material is known as recycled concrete fines (RCF).

However, the use of such recycled mineral material, e.g. RCF, has a disadvantage as the amount thereof in the cementitious building material (concrete) increases: the strength properties of the cement are significantly reduced as the RCF content increases. That is, increasing the amount of RCF in the cementitious binder component significantly reduces the strength properties of the cementitious building material, in particular the early strength.

There is therefore a need to provide a supplementary cementitious material that can replace part or all of the cement (Portland clinker) in the binder of a cementitious building material (such as concrete or mortar) without loss of strength, especially when the supplementary cementitious material is used in a high proportion, e.g. at levels above 50 wt%, i.e. when it replaces a large part or all of the Portland clinker in conventional cement.

### Solution to the problem

The invention is based on the finding that the above problem can be solved by producing a supplementary cementitious material from a (recycled) mineral material, such as recycled concrete fines (RCF) by a method that involves two essential steps: a step of chemical activation and a step of thermal activation of the mineral material. In particular, when the supplementary cementitious material thus obtained is used to replace a high proportion of Portland clinker in conventional cement, a cementitious building material having good strength, especially high early strength, can be obtained. That is, the combination of the aforementioned two steps (chemical and thermal activation) was found to be unexpectedly effective in improving the reactivity of recycled concrete fines.

Thus, the invention provides a method of manufacturing a supplementary cementitious material from a mineral material, the method comprising the following steps: a step of grinding the mineral material; a step of chemical activation, carried out during or after the step of grinding; a step of thermal activation, carried out before or after the step of chemical activation; wherein the mineral material comprises cement paste; and wherein the step of chemical activation is carried out by contacting the mineral material with at least one activator selected from alkali metal salts.

The invention further provides a supplementary cementitious material obtainable by the above method.

The invention also provides a composite binder comprising: the above supplementary cementitious material; less than 30 parts by weight of Portland clinker; and optionally less than 15 parts by weight of a calcium sulfate, per 100 parts by weight of the composite binder, based on the dry weights of all components.

The invention also provides a cementitious building material comprising the above composite binder, sand and/or aggregates and water.

The invention also provides the use of the above supplementary cementitious material in a composite binder for improving short term strength of a cementitious building material.

### Effects of the invention

The invention solves the above problem by providing a method of manufacturing a supplementary cementitious material which involves activating the (recycled) mineral material used as starting material by a combination of a step of chemical activation and a step of thermal activation, wherein the step of chemical activation is carried out by contacting the mineral material with at least one activator selected from alkali metal salts.

When the supplementary cementitious material obtained thereby is used to produce a composite binder for a cementitious building material, the activation according to the method of the invention has the unexpected effect on providing improved mechanical strength, especially in the short term, i.e. within a relatively short time after preparation of the cementitious building material, such as after 2 and/or 7 days. This effect is particularly pronounced when the supplementary cementitious material is used in a high proportion such that the composite binder comprises less than 30 parts by weight of Portland clinker per 100 parts by weight of the composite binder, based on the dry weights of all components.

The beneficial effect of the invention is that it makes it possible to produce a composite binder for a cementitious building material with low emission of CO₂. This is achieved by making it possible to use a high proportion of (recycled) mineral material comprising cement paste, such as recycled concrete fines, as replacement of Portland clinker contained in conventional cement, while maintaining good mechanical properties, especially good strength achieved within a short time. The invention therefore makes it possible to use substantial amounts of recycled mineral material, preferably recycled concrete fines, in a composite binder with a low amount of Portland clinker (cement) in the binder. In contrast to activation performed using only thermal treatment or only chemical activation, the invention makes it possible to achieve considerable improvements in short term strength, such as after 2 and/or 7 days.

### DESCRIPTION OF EMBODIMENTS

The method of manufacturing a supplementary cementitious material from a mineral material comprises the following steps: a step of grinding the mineral material; a step of chemical activation, carried out during or after the step of grinding; a step of thermal activation, carried out before or after the step of chemical activation; wherein the mineral material comprises cement paste; and wherein the step of chemical activation is carried out by contacting the mineral material with at least one activator selected from alkali metal salts.

The mineral material used as starting material in the method of the invention comprises cement paste. The mineral material generally comprises from 1 to 99% by weight of cement paste based based on the dry weight of the mineral material. The mineral material may comprise at least 5%, preferably at least 10%, more preferably at least 20% by weight of cement paste based on the dry weight of the mineral material. The mineral material may comprise up to 90%, preferably up to 80%, more preferably up to 50%, even more preferably up to 40% by weight of cement paste based on the dry weight of the mineral material. The mineral material may comprise 1% to 90%, preferably 5% to 50%, more preferably 10% to 40% by weight of cement paste based on the dry weight of the mineral material.

The mineral material comprising cement paste may be solid wastes generated from building construction, demolition and/or renovation activities, material reclaimed from concrete production, building demolition concrete material, recycled concrete fines, and mixtures thereof. The mineral material comprising cement paste may be crushed concrete which may contain, in addition to cement paste, crushed aggregates and sand. Recycled mineral or building materials which do not comprise at least 1% by weight of cement paste, such as recycled bricks, are excluded.

The mineral material may comprise at least one of the group of hydrated cement paste, recycled cement paste, hardened concrete paste, hardened cement paste, dried concrete sludges, and any mineral component containing hydrated calcium silicates or calcium aluminates. As the skilled person knows, cement paste always contains hydrated cement paste, i.e. hydrated calcium silicates and/or calcium aluminates. Thus, the mineral material generally comprises hydrated cement paste. Preferably, hydrated cement paste is contained in the amounts indicated above for cement paste. That is, the mineral material may generally comprise from 1 to 99% by weight of hydrated cement paste based based on the dry weight of the mineral material. The mineral material may comprise at least 5%, preferably at least 10%, more preferably at least 20% by weight of hydrated cement paste based on the dry weight of the mineral material. The mineral material may comprise up to 90%, preferably up to 80%, more preferably up to 50%, even more preferably up to 40% by weight of hydrated cement paste based on the dry weight of the mineral material. The mineral material may comprise 1% to 90%, preferably 5% to 50%, more preferably 10% to 40% by weight of hydrated cement paste based on the dry weight of the mineral material.

Recycled concrete fines (RCF) are particularly useful as the mineral material and may be recycled concrete fines as defined in standard EN 197-6:2023 and/or further fulfilling the requirements as specified in standard EN 1260. In particular, Section 4.2 of Standard EN 197-6:2023 defines concrete fines that can be used as the mineral material in the method according to the invention and also defines the mineral components from which such recycled fines are obtained.

The at least one activator used in the step of chemical activation is selected from alkali metal salts.

Useful alkali metal salts may be selected from alkali metal carbonates, alkali metal silicates, alkali metal metasilicates, alkali metal formates, alkali metal hydroxides, alkali metal oxalates, alkali metal thiocyanates, alkali metal chlorides, alkali metal sulfates, alkali metal nitrates and mixtures thereof.

In preferred embodiments, the at least one activator is selected from alkali metal carbonates, alkali metal silicates, alkali metal metasilicates, alkali metal formates, alkali metal oxalates, alkali metal thiocyanates, alkali metal sulfates, alkali metal nitrates and mixtures thereof.

In preferred embodiments, the at least one activator is selected from sodium salts and potassium salts, preferably sodium salts.

In further preferred embodiments, the at least one activator is selected from sodium carbonate, sodium silicate, sodium sulfate, sodium metasilicate, sodium hydroxide, sodium aluminate, sodium nitrate, potassium silicate, potassium hydroxide, potassium sulfate and mixtures thereof.

In particularly preferred embodiments, the at least one activator is selected from sodium silicate, sodium sulfate, sodium metasilicate and mixtures of thereof.

Particularly preferred activators are sodium sulfate (Na₂SO₄) and sodium metasilicate. Of these, sodium metasilicate is particularly preferred.

As indicated above, the step of chemical activation is carried out during or after the step of grinding and the step of thermal activation is carried out before or after the step of chemical activation. Therefore, the method of manufacturing a supplementary cementitious material according to the invention may be implemented in various ways with respect to the order in which the aforementioned steps are carried out sequentially or simultaneously.

In particular, the method of manufacturing a supplementary cementitious material according to the invention may be implemented such that it comprises a step of grinding the mineral material to obtain a ground mineral material; a step of chemical activation of the ground mineral material, carried out after the step of grinding, to obtain chemically activated recycled concrete fines; a step of thermal activation of the chemically activated recycled concrete fines, carried out after the step of chemical activation.

The method of manufacturing a supplementary cementitious material according to the invention may also be implemented such that it comprises a step of grinding and chemical activation of the mineral material to obtain chemically activated recycled concrete fines; a step of thermal activation of the chemically activated recycled concrete fines, carried out after the step of grinding and chemical activation.

Further, the method of manufacturing a supplementary cementitious material according to the invention may be implemented such that it comprises a step of grinding the mineral material to obtain a ground mineral material; a step of thermal activation of the ground mineral material, carried after the step of grinding, to obtain a ground and thermally activated mineral material; a step of chemical activation of the ground and thermally activated mineral material, carried out after the step of thermal activation.

The step of thermal activation may be carried out in a cement kiln, a clinker cooler, a temperature flash calciner, an electric furnace, a multiple hearth furnace or a fluidized bed, preferably a cement kiln.

The step of thermal activation may be carried out in a temperature range from 700°C to 900°C. In preferred embodiments, the step of thermal activation may be carried out in a temperature range from 750°C to 850°C, more preferably in a temperature range of 780°C to 820°C.

The step of thermal activation may be carried out for a duration from 15 min to 180 min. In preferred embodiments, the step of thermal activation may be carried out for a duration of 30 to 150 min, more preferably for a duration of 60 to 120 min.

In preferred embodiments, the step of thermal activation may carried out in a temperature range from 700°C to 900°C, preferably 750°C to 850°C, for a duration of 15 min to 180 min, preferably 30 min to 150 min, more preferably in a temperature range from 780°C to 820°C for a duration from 60 min to 120 min. The thermal activation is carried out in such a way that the mineral material is heated to the temperatures stated for the durations stated.

Several methods known to a skilled person may be used for thermally activating the mineral material. The choice of the method depends on factors such as the scale of production, the specific nature of the mineral material and the desired characteristics of the final product.

According to one alternative, the step of thermal activation is carried out by means of a rotary kiln. This involves feeding the mineral material into a rotating cylindrical furnace, where it is heated to the desired temperature in the range of 700°C to 900°C. The rotation of the kiln ensures thorough mixing and even heating of the material, promoting consistent thermal activation.

Alternatively, a vertical shaft kiln may be used for the step of thermal activation. In this case, the mineral material is loaded at the top of a tall, vertical furnace and heated as it descends through the kiln.

Flash calcination is another method that can be employed, particularly when the reactivity of the resulting product is of utmost importance. This process involves rapidly heating the mineral material to the desired temperature and then cooling it quickly. This rapid heating and cooling cycle can enhance the reactivity of the thermally activated product, which may improve the performance of the resulting cementitious building material.

Alternatively, a fluidized bed calcination may be used, which is a method wherein the mixture is suspended in a rising flow of hot gas. This ensures very high heat and mass transfer rates, providing rapid, uniform heating.

The step of grinding the mineral material may be carried out by means of a ball mill, an attrition cell, a planetary ball mill, a jet mill, a pin mill, an eccentric vibratory mill and the like. The at least one activator may be added to any of these devices during the step of grinding the mineral material.

The step of grinding the mineral material comprising cement paste may be grinding of recycled concrete, where the product obtained by such grinding is a mix of crushed aggregates, cement paste and sand.

The mineral material comprising cement paste used as starting material in the method of the invention may be processed such that the cement paste is separated from aggregates and sand, so as to enrich the material in the content of the cement paste. In particular, sieving or other separations steps can be performed after the grinding to obtain a material with enriched content of cement paste.

In the context of the invention, grinding is understood as any means to reduce the size of the particles including crushing or attrition.

The step of chemical activation may be carried out by contacting the mineral material with 0.5 wt% to 5.0 wt%, preferably 1.5 wt% to 3.0 wt%, of the at least one activator, based on the dry weight of the activator and the dry weight of the mineral material.

The step of chemical activation may be carried out by contacting the mineral material with the at least one activator present in solid form or as a solution.

The contacting may be performed by mixing the mineral material with the activator in a container. For example, especially when working on a small scale, the mineral material may be mixed with the activator in a stainless steal container by mechanical mixing. In this embodiment, the alkali activator may be used in solid form. Especially when working on a large (industrial) scale, the mixing could be performed by adding the alkali metal salt activator to a ball mill when grinding the mineral material. In another embodiment, the activator may be used in the form of a solution and applied directly on the mineral material, for example by spraying through nozzles. This is advantageous since it could lower the amount of activator that is required and allow to activate the surface of the mineral material directly.

The supplementary cementitious material obtainable by the above method according to the invention may be used to produce a composite binder for a cementitious building material, wherein the composite binder comprises the supplementary cementitious material; less than 30 parts by weight of Portland clinker; and optionally less than 15 parts by weight of a calcium sulfate; per 100 parts by weight of the composite binder, based on the dry weights of all components.

In certain embodiments, the composite binder comprises less than 25 parts by weight, or even less that 20 parts by weight, of Portland clinker per 100 parts by weight of the composite binder, based on the dry weights of all components.

The composite binder is a hydraulic binder.

In the composite binder, the Portland clinker may be added in the form of cements selected from the group consisting of CEM I, CEM II, CEM III, CEM IV, CEM V and CEM VI as defined in the standard EN-197-1 of April 2012 and in the standard NF EN-197-5 of May 2021, respectively.

In the composite binder, the calcium sulphate may be selected from calcium sulphate dihydrate, i.e. CaSO₄ · 2 H₂O, calcium sulphate hemi-hydrate, i.e. CaSO₄ · ½ H₂O, anhydrous calcium sulphate, i.e. CaSO₄, and mixtures thereof. Calcium sulphate produced as a byproduct of industrial processes may also be used.

The composite binder optionally comprises less than 15 parts by weight of a calcium sulfate, preferably, less than 10 parts by weight, more preferably less than 5 parts by weight of a calcium sulfate, per 100 parts by weight of the composite binder, based on the dry weights of all components.

The composite binder may further comprise calcium aluminate cement (CAC) or calcium sulfoaluminate cement (CSA), or both.

The composite binder may further comprise, in addition to the supplementary cementitious material obtainable by the method according to the invention, one or more other supplementary cementitious material, i.e. one that is different from the supplementary cementitious material obtainable by the method according to the invention. Such other supplementary cementitious materials are defined in standard DIN EN 197-1:2011-11, Sections 5.2.2.-5.2.7.

The composite binder according to the invention, may be used to produce a cementitious building material comprising the composite binder and further comprising sand and/or aggregates and water. The cementitious building material may be a mortar, a tile adhesive or a concrete. It is particularly advantageous to use the composite binder according to the invention to produce concrete.

The composite binder or the cementitious building material may further comprise various workability improvers, such as a water reducer and/or defoamer. The water reducer may be a plasticizer or superplasticizer. The water reducer may be a plasticizer or a superplasticizer as defined in the standard EN 934-2 of 2001. In preferred embodiments, the plasticizer or superplasticizer may be based on modified phosphonates, polycarboxylate ethers, polynaphthalene sulfonates, polymelamine sulfonates and/or vinyl copolymers. The plasticizer or superplasticizer may be selected from lignosulfonates, sugar acids, sugars, sodium salts of gluconic acid and mixtures thereof. Further, the superplasticizer may be a polycarboxylate ether. In a preferred embodiment, the cementitious building material contains both a defoamer and a superplasticizer belonging to the group of polycarboxylate ethers, which provides a particularly beneficial effect with respect to strength. The aforementioned workability improvers may be added to the composite binder. For example, a superplasticizer, such as a polycarboxylate ether, may be added to the composite binder. The aforementioned workability improvers may be added to the cementitious building material. The aforementioned workability improvers may also be added to both the composite binder and the cementitious building material.

The supplementary cementitious material according to the invention may be used in a composite binder for improving short term strength of a cementitious building material.

A composite binder according to the invention may also be obtained directly by mixing: a thermally activated mineral material obtained by thermally activating a mineral material selected from (i) solid wastes generated from building construction, demolition and/or renovation activities, (ii) material reclaimed from concrete production, and (iii) mixtures thereof; at least one activator selected from alkali metal salts; Portland clinker; and optionally calcium sulfate; wherein the amount of Portland clinker is less than 30 parts by weight per 100 parts by weight of the composite binder material, based on the dry weights of all components; wherein the amount of calcium sulfate is less than 10 parts by weight per 100 parts by weight of the composite binder, based on the dry weights of all components. In this case, too, the mineral material, the activator, the mode and conditions of thermal activation, the mode and conditions of grinding and chemical activation, the optional components (such as calcium sulphate and water reducer and/or defoamer) may be the same as those indicated above.

### EXAMPLES

The invention will be further illustrated by the following non-limiting examples.

To assess the mechanical properties of cementitious building materials according to the invention, mortars were prepared and tested according to standard EN 196-1 of April 2012.

In these examples, a supplementary cementitious material according to the invention was manufactured *in situ* and mixed immediately with Portland clinker, sand and/or aggregates and water to directly obtain the cementitious building material (mortar).

Unless otherwise stated, all amounts or ratios of amounts are on a weight basis.

### Examples A1 and A2

### Preparation of mortar samples

As liquid components, 225 g of water, 6.3 g of a superplasticizer (ChrysoFluid Premia 180 [commercial designation], obtained from Chryso S.A.S., dry matter content: 22%) and 0.1 g of a defoamer (triisobutyl phosphate, obtained from VWR, dry matter content: 11%) were placed in the mixing bowl of an automatic mixer.

In a stainless-steel container the following components were manually and gently mixed to obtain a homogeneous powder mixture:
- 382.5 g of mineral material (namely recycled concrete fines, RCF, as specified below)
- 67.5 g of cement (as specified below, containing Portland clinker)
- 9 g of alkali metal salt activator (namely sodium sulfate [Example A1] or sodium metasilicate [Example A2])

A bag of 1350 g of CEN sand was poured into the sand container of the automatic mixer. The powder mixture was quickly poured into the mixing bowl containing the liquid components and the mixing process began immediately at a slow speed for 30 seconds. After 30 seconds, the sand was introduced into the bowl, and the mixing speed was increased to high for another 30 seconds. The mixer was then stopped and the bottom of the bowl was scraped with the paddle for 90 seconds. The paddle and bowl were placed again in the automatic mixer and the mixture was mixed at high speed for an additional 1 minute.

Thus, the formulation of the mortars was: 225 g of water + 450 g of mineral material and cement + 1350 g of sand. The weight ratio of water to mineral material and cement was 1 : 2.

A superplasticizer and defoamer were used because without a superplasticizer and a defoamer, it is very difficult to mix the mortars properly (the mortars have very poor workability and cannot be poured into molds).

### Raw materials

The following raw materials were used in the examples:
Sodium sulfate (Na₂SO₄) was obtained from Lenzing. Sodium metasilicate was obtained from Sigma-Aldrich.

The mineral material used was recycled concrete fines (RCF) from returned concrete (i.e. fresh concrete that is returned from a building site and then reused) having a cement paste content of 20 wt.%, based on the dry weight of the returned concrete. The material was obtained by grinding returned concrete with particle size ranging from 0 to 8 mm in an industrial ball mill. The properties of the RCF obtained from the returned concrete after grinding were: density of 2.61 g/cm³; an air permeability specific surface determined by the Blaine method of 7150 cm²/g; and the following granulometric particle size distribution parameters: D₁₀ = 2.1 µm, D₅₀ = 12.5 µm, D₉₀ = 48.4 µm. The loss on ignition (LOI, 950°C) was: 13.06%. The chemical composition (by weight) as determined by X-ray fluorescence (XRF) was as follows: SiO₂: 59.78%; Al₂O₃: 4.15%; Fe₂O₃: 2.02%; CaO: 17.96%; MgO: 0.74%; K₂O: 1.04%; Na₂O: 0.43%; SO₃: 0.49%; TiO₂: 0.19%; Mn₂O₃: 0.06%; P₂O₅: 0.09%; Cr₂O₃: <0.05%; ZrO₂: <0.05%; SrO: <0.05%; Total: 100.0%.

In the context of the present invention, the particle size distribution parameter Dₙ (where n stands, for example, for 10, 50 or 90) refers to the n-th percentile of the size distribution of the particles, by volume; that is, n% of the particles have a size that is less than or equal to the value of the Dₙ and (100-n)% of the particles have a size that is greater than the value of the Dₙ. The particle size distribution is measured by laser granulometry, for example with a Malvern MS2000 instrument.

This material was thermally treated by heating (calcination) to 800°C for 2 hours; thereafter the density was 2.78 g/cm³ and the particle size distribution parameters were: D₁₀ = 3.5 µm, D₅₀ = 18.3 µm, D₉₀ = 59.8 µm. The calcination was performed in a rotary kiln at 800°C with a diameter of 30 cm and length of 7 m. The feed rate was 30 kg/h. The retention time was 2 hours.

The cement (containing Portland clinker) used in the experiments was CEM I SPLC 52.5 N supplied by Holcim, which had a density of 3.13 g/cm³; an air permeability specific surface determined by the Blaine method of 3880 cm²/g; and the following granulometric particle size distribution parameters: D₁₀ = 2.90 µm, D₅₀ = 14.68 µm, D₉₀ = 38.22 µm.

### Measurement of mortar properties

Compressive strength of the mortar samples was determined according to standard EN 196-1 on prismatic test specimens with dimensions of 40 mm × 40 mm × 160 mm. The samples were stored in a controlled atmosphere chamber at 20°C and 100% relative humidity for approximately 1 day (during the setting) followed by an immersion in water at 20°C after the demolding. Compressive strengths were measured after 2 days, 7 days and 28 days. The results are shown in Table 1 which also indicates the amounts of the various starting materials used in the individual examples and comparative examples.

### Comparative Example A3

A mortar was prepared and tested as in Example A1, except that no alkali metal salt activator (sodium sulfate) was used.

### Examples B1 to B3 and Comparative Examples B4, C1 to C3, D1 to D3 and E1 to E3

Mortars was prepared and tested as in Example A1, except that the mineral material was not thermally treated (calcined) and/or the amounts of components were varied as indicated in Table 1.

More specifically, in Examples B1 to B3 and in Comparative Example B4 100% of thermally treated RCF was used with or without alkali metal salt activator.

In Comparative Examples C1 to C3 100% of untreated RCF (i.e. RCF that was not thermally treated) was used with or without alkali metal salt activator.

In Comparative Examples D1 to D3 a blend of 25% of untreated RCF and 75% cement was used with or without alkali metal salt activator. In view of the low content of mineral material (RCF), the use of superplasticizer (water reducer) and defoamer could be omitted in these comparative examples (as well as in Comparative Examples E1 to E3) because the negative impact associated with the RCF on workability, mixability and pourability could be neglected.

In Comparative Examples E1 to E3 a blend of 25% of thermally treated RCF and 75% cement was used with or without alkali metal salt activator.

The compositions of the various mortars produced in the examples and the results of the compressive strength tests are shown in the following Table 1.

**Table 1**

| **Example (* marks comparative examples)** | **Mineral material** | | **Cement (g)** | **Weight ratio of mineral material : cement** | **Sodium sulfate (g)** | **Sodium metasilicate (g)** | **Superplasticizer (g)** | **Defoamer (g)** | **Compressive strength (MPa) after** | | |
|---|---|---|---|---|---|---|---|---|---|---|---|
| | **thermally treated** | **Amount (g)** | | | | | | | **2 days** | **7 days** | **28 days** |
| A1 | yes | 382.5 | 67.5 | 85 : 15 | 9 | 0 | 6.3 | 0.1 | 8.91 | 14.1 | 17.6 |
| A2 | yes | 382.5 | 67.5 | 85 : 15 | 0 | 9 | 6.3 | 0.1 | 10.5 | 14.6 | 19.5 |
| A3* | yes | 382.5 | 67.5 | 85 : 15 | 0 | 0 | 6.3 | 0.1 | 2.37 | 11.1 | 18.6 |
| B1 | yes | 450 | 0 | 100 : 0 | 4.5 | 0 | 6.3 | 0.1 | 4.2 | - | 13.3 |
| B2 | yes | 450 | 0 | 100 : 0 | 9 | 0 | 6.3 | 0.1 | 4.8 | - | 11.9 |
| B3 | yes | 450 | 0 | 100 : 0 | 0 | 9 | 6.3 | 0.1 | 7.39 | - | 14.4 |
| B4* | yes | 450 | 0 | 100 : 0 | 0 | 0 | 6.3 | 0.1 | 0.0 | - | 11.0 |
| C1 | no | 450 | 0 | 100 : 0 | 0 | 0 | 6.3 | 0.1 | 0 | - | 1.0 |
| C2* | no | 450 | 0 | 100 : 0 | 9 | 0 | 6.3 | 0.1 | 0.7 | - | 1.3 |
| C3* | no | 450 | 0 | 100 : 0 | 18 | 0 | 6.3 | 0.1 | 0.4 | - | 1.0 |
| D1* | no | 112.5 | 337.5 | 25 : 75 | 0 | 0 | 0.0 | 0.0 | 27.6 | 40.5 | 48.9 |
| D2* | no | 112.5 | 337.5 | 25 : 75 | 2.3 | 0 | 0.0 | 0.0 | 29.0 | 38.5 | 46.0 |
| D3* | no | 112.5 | 337.5 | 25 : 75 | 4.5 | 0 | 0.0 | 0.0 | 30.5 | 37.4 | 44.5 |
| E1* | yes | 112.5 | 337.5 | 25 : 75 | 0 | 0 | 0.0 | 0.0 | 29.4 | 43.8 | 55.4 |
| E2* | yes | 112.5 | 337.5 | 25 : 75 | 2.3 | 0 | 0.0 | 0.0 | 28.5 | 41.5 | 53.1 |
| E3* | yes | 112.5 | 337.5 | 25 : 75 | 4.5 | 0 | 0.0 | 0.0 | 30.7 | 40.0 | 50.5 |

The results shown in Table 1 may be summarized as follows:
Examples A1 and A2 and Comparative Example A3 demonstrate the positive effect of alkali metal salt activators on strength when used for a combination of 85% thermally activated RCF blended with 15% cement; the effect is evident after 2 and 7 days, with comparable properties after 28 days. Sodium sulfate and sodium metasilicate were found to be effective activators with sodium metasilicate yielding the best results.

In Examples B1 to B3, mortars prepared with 100% thermally treated RCF with alkali metal salt activation showed significant improvement in strength after 2 days and 28 days (especially relative to Comparative Examples B4 and C1 to C3), which is due to the combination of thermal treatment and alkali metal salt activation. While the strength values are relatively low, these examples demonstrate that it is possible to prepare a mortar without any cement just by using 100% thermally treated and chemically activated RCF. By contrast, in Comparative ExamplesB4, a mortar prepared with 100% thermally treated RCF without alkali metal salt activation did not develop any strength after 2 or 7 days.

In Comparative Examples C1 to C3, mortars composed entirely of untreated RCF (100%) did not achieve setting within 24 hours and exhibited no compressive strength after 2 days. Adding an alkali metal salt activator to a 100% untreated RCF mortar resulted in setting, but the compressive strength remained very low.

In Comparative Examples D1 to D3 and E1 to E3, where only 25% of thermally treated or untreated RCF was combined with 75% cement, the alkali metal salt activator slightly improved strength after 2 days but strength significantly decreases after 28 days. There is no benefit from using activated RCF in composite binders with high amounts of cement.

## Claims

1. A method of manufacturing a supplementary cementitious material from a mineral material, the method comprising the following steps:
a step of grinding the mineral material;
a step of chemical activation, carried out during or after the step of grinding;
a step of thermal activation, carried out before or after the step of chemical activation;
wherein the mineral material comprises cement paste; and
wherein the step of chemical activation is carried out by contacting the mineral material with at least one activator selected from alkali metal salts.

2. The method of claim 1, wherein the mineral material comprising cement paste is selected from the group consisting of solid wastes generated from building construction, demolition and/or renovation activities, material reclaimed from concrete production, recycled concrete fines, and mixtures thereof.

3. The method of claim 1 or 2, wherein the at least one activator is selected from alkali metal carbonates, alkali metal silicates, alkali metal metasilicates, alkali metal formates, alkali metal hydroxides, alkali metal oxalates, alkali metal thiocyanates, alkali metal chlorides, alkali metal sulfates, alkali metal nitrates and mixtures thereof.

4. The method of any of claims 1 to 3, wherein the method comprises:
a step of grinding the mineral material to obtain a ground mineral material;
a step of chemical activation of the ground mineral material, carried out after the step of grinding, to obtain chemically activated recycled concrete fines;
a step of thermal activation of the chemically activated recycled concrete fines, carried out after the step of chemical activation.

5. The method of any of claims 1 to 3, wherein the method comprises:
a step of grinding and chemical activation of the mineral material to obtain chemically activated recycled concrete fines;
a step of thermal activation of the chemically activated recycled concrete fines, carried out after the step of grinding and chemical activation.

6. The method of any of claims 1 to 3, wherein the method comprises:
a step of grinding the mineral material to obtain a ground mineral material;
a step of thermal activation of the ground mineral material, carried after the step of grinding, to obtain a ground and thermally activated mineral material;
a step of chemical activation of the ground and thermally activated mineral material, carried out after the step of thermal activation.

7. The method of any of the preceding claims, wherein the step of thermal activation is carried out in a cement kiln, a clinker cooler, a temperature flash calciner, an electric furnace, a multiple hearth furnace or a fluidized bed, preferably a cement kiln.

8. The method of any of the preceding claims, wherein the step of thermal activation is carried out in a temperature range from 700°C to 900°C for a duration from 15 min to 180 min.

9. The method of any of the preceding claims, wherein the step of chemical activation is carried out by contacting the mineral material with 0.5 wt% to 5.0 wt%, preferably 1.5 wt% to 3.0 wt%, of the at least one activator, based on the dry weight of the activator and the dry weight of the mineral material.

10. The method of any of the preceding claims, wherein the step of chemical activation is carried out by contacting the mineral material with the at least one activator present in solid form or as a solution.

11. A supplementary cementitious material obtainable by the method of any one of claims 1 to 10.

12. A composite binder comprising:
the supplementary cementitious material of claim 11,
less than 30 parts by weight of Portland clinker, and
optionally less than 15 parts by weight of a calcium sulfate,
per 100 parts by weight of the composite binder, based on the dry weights of all components.

13. The composite binder of claim 12, further comprising calcium aluminate cement (CAC) or calcium sulfoaluminate cement (CSA), or both.

14. A cementitious building material comprising the composite binder of any one of claims 12 and 13, further comprising sand and/or aggregates and water.

15. The use of the supplementary cementitious material of claim 11 in a composite binder for improving short term strength of a cementitious building material.
